Europäisches Patentamt

European Patent Office

Office européen des brevets

(11) Publication number: **0 229 749**
**B1**

# (12) EUROPEAN PATENT SPECIFICATION

(45) Date of publication of patent specification: **13.06.90**

(51) Int. Cl.⁵: **B 04 B 1/08**

(21) Application number: **87850007.3**

(22) Date of filing: **12.01.87**

(54) A separator for separating two mixed liquids having different specific weight.

(30) Priority: **15.01.86 NO 860122**

(43) Date of publication of application:
**22.07.87 Bulletin 87/30**

(45) Publication of the grant of the patent:
**13.06.90 Bulletin 90/24**

(84) Designated Contracting States:
**AT BE CH DE ES FR GB GR IT LI LU NL SE**

(56) References cited:
**DE-A-2 402 250**
**FR-A- 731 066**
**GB-A- 105 318**
**GB-A- 676 604**

(73) Proprietor: **Kalleberg, Jacob**
**Dalbolia 3**
**N-4600 Kristiansand S (NO)**

(72) Inventor: **Kalleberg, Jacob**
**Dalbolia 3**
**N-4600 Kristiansand S (NO)**

(74) Representative: **MacFie, W.R. et al**
**Albihn West AB Stora Nygatan 15**
**S-411 08 Göteborg (SE)**

Courier Press, Leamington Spa, England.

## Description

The invention relates to a separator for separating two mixed liquids having different specific weight, e.g. water contaminated with oil according to the first part of claim 1 (DE—A—2402250).

There is, today, a demand for a separator for separating two mixed liquids having different specific weight. A typical example is water that is contaminated with oil. There is, thus, an obvious demand for a separator resulting in purification of water containing oil, e.g. on board a ship and offshore installations.

It is an object of the invention to subject the mixture of liquids to centrifugal forces resulting in considerable increase of the difference of weight, and with an associated separation of said two mixed liquids. The invention is based on the principle that by utilizing centrifugal forces a continuous liquid annulus is built on both sides of and radially outside a wall transversal to the rotational axis of said liquid annulus, said mixture of liquids being fed to said liquid annulus on one side of said wall, and the liquid in said liquid annulus being permitted to pass over an overflow rim at each axial end of said liquid annulus, said overflow rim on the side of said wall where a mixture of liquids is supplied being higher (having a smaller radius) than the other overflow rim, and the radius of said transversal wall being larger than the respective radiuses of said two overflow rimes. In this manner a separation system is built up, where the balance always present in an U-tube is utilized. In the case of water contaminated with oil the oil will collect on the inside mantle surface of said liquid annulus, on the side of said transversal wall where said mixture of liquids is supplied, and it will flow out across the higher overflow rim, whereas pure water, will flow out across said lower overflow rim.

According to the invention a separator for separating two mixed liquids having different specific weight, e.g. water contaminated with oil, is thus proposed, which separator is comprising a rotatable casing with a coaxial opening at each axial end, wherein said one coaxial opening has a larger radius than the other, characterized by a transversal wall in said casing, which transversal wall, at its periphery, at a radius larger than the biggest opening radius, limits a peripheral axial flow connection along the internal wall of said casing, between said coaxial openings, and an axial inlet for the mixture of liquids.

In order to increase the capacity of said separator the axial inlet enters said casing on that side of said transversal wall where the axial opening having the largest radius is situated, and there it may have a coaxial enlargement forming a first compartment, said transversal wall forming a wall of said compartment and having a coaxial through opening.

Frusto-conical guide cups and diversion conuses are provided in said casing, said conical means extending coaxially from said transversal wall on the side facing said coaxial opening with a smaller radius, contracting towards said opening, and being mutually stepped as to the height of conus, said guide cups having openings in the area adjacent said transversal wall. Said inlet opens inside the innermost conical means, whereas the peripheral axial flow connection is outside the outermost conical means. In this manner the advantageous effect of such conical means is utilized.

The Frusto-conical guide cups and diversion conuses may also be provided in said first compartment, said conical means extending from the axially symmetric wall of said compartment, tapering towards said transversal wall, and having mutually stepped top radiuses, with said guide cups having the smallest top radiuses and having openings adjacent said wall.

An especially advantageous embodiment is achieved if said axially symmetric wall of the preseparation compartment extends out through the adjacent first compartment at the end of said casing and, there, forms a sleeve for receiving a stationary axial inlet pipe. In such an embodiment the first compartment is, preferably provided with a cup shaped space, opening towards said inlet pipe and surrounded by the conical guide plates in said first compartment. The mixture of liquids introduced through said stationary inlet pipe will be deflected into a rotational trumpet in said cup shaped space, flow across the rim of said cup and then through said first compartment, where said mixture of liquids is influenced by the conical means provided there.

Advantageously, radial walls are provided on said conical means. The object of said conical walls is that they should act as take along plates to keep the mixture of liquids, and the separated liquids rotating, permitting full centrifugal effect to be maintained at all diametres. Such radial walls will also contribute to maintain a stable liquid annulus to ensure a balance in said separator.

It will be especially advantageous to provide said separator with a supply means for building a liquid annulus consisting of one, heavier liquid in said casing in the beginning of its rotation, before the mixture of liquids is introduced. This is especially advantageous, e.g. in case of oil containing water, since pure water can then be introduced through said supply means to build a water seal from pure water which will prevent oil from leaking outwards through the pure water outlet of said separator.

In order to recover any possible residues of, e.g. separated oil present in said casing when the separator is started, a sealing screen may, advantageously, be provided so as to project into said casing from its interior wall, laterally of the transversal wall comprising said coaxial opening having a smaller radius. Said sealing screen will then, in case of oil, mud, etc., catch this to prevent it from being flung out towards the casing wall when the casing starts to rotate and to prevent it from reaching the pure water outlet.

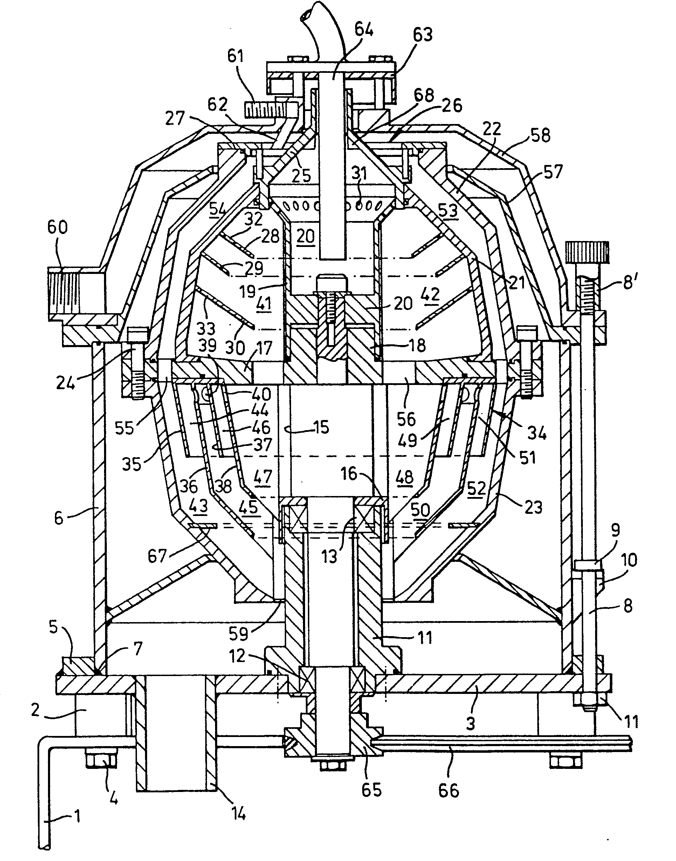

The invention will be disclosed in more detail with reference to the drawing showing a sectional view of a preferred embodiment of a separator according to the invention.

The separator shown in the drawing is intended for purification of oil containing water.

A base is designated 1. A base plate 3 is mounted on base 1 with intermediate rubber pads 2. Base plate 3 is secured to base 1 by the aid of screws 4. On top of the base plate a ring 5 is secured by welding. Within said ring 5 a mantle 6 is provided with an O-ring 7 between said means. Mantle 6 is attached to base plate 3 by tie-rods 8. Each tie-rod (only one is shown) has a collar 9 in contact with a bracket 10. By the aid of nut 11 said tie-rod is tensioned to make collar 9 press against bracket 10 and, thus, keep mantle 6 in place on base plate 3.

Base plate 3 has a central opening wherein a bearing casing 11 with a lower bearing 12 and an upper bearing 13 is provided. In base plate 3, furthermore, an outlet means 14 for oil is provided.

A separator shaft 15 is mounted in said two bearings 12 and 13 in bearing casing 11. As shown, the separator shaft is stepped, and between the thickest portion of separator shaft and a connected bearing passage an ejector 16 is provided.

At the other end of the thickest portion of the separator shaft a transversal wall 17 is provided, as shown, said transversal wall has a central boss 18 surrounding the upper, thinner portion of said separator. On boss 18 a cylindrical means 19 with an interior transversal wall 20 is mounted. The upper portion of cylinder 19, thus, forms a cup shaped compartment 20.

On transversal wall 17 a conical interior casing 21 is mounted, and outside said casing the transversal wall 17 is provided with an exterior casing portion 22. Coreresponidingly, the lower side of transversal wall 17 is provided with an exterior lower casing portion 23. Said casing portions, 22 and 23, form a separator casing. As shown, said two casing portions 22, 23, and said transversal wall 17 are held together by screw bolts 24.

Said conical interior casing 21 on top ends in an inverse inlet hopper 25. Said inlet hopper 25 may be designed in one piece with the above mentioned cylinder 19, but is preferably a separate member connected with said cylinder 19.

Said upper exterior casing portion 22 has an axial opening 25. Here, a so called specific weight ring 27. Said specific weight ring is a plate ring and the cross section of the opening of said ring may vary, i.e. the cross section of axial opening 26 may be varied by exchangeing said specific weight ring by another, having a different opening. Said specific weight ring is fastened by screwing it on top of exterior casing portion 22.

Inside said conical internal casing 21 conical members 28, 29, 30 are provided. In the conical transition area between cylinder 19 and inlet hopper 25 openings 31 are made. In said conical members 28 and 30 openings 32, 33 are made close to the internal wall in said conical internal casing 21, as shown, and said conical members are, thus, called conical guide cups. Conical member 29 is called a diverting conus. In the sectional view only two openings 32 and 33, respectively, are shown but there are naturally a number of them, in the same manner as shown for openings 31.

In said lower, exterior casing portion 23 an insert 34 is provided which comprises several conical members 35, 36, 37, and 38. In the areas adjacent the lower side of transversal wall 17, as shown, there are made openings 39, 40 in conical members 36 and 38, and said members are, thus, below called conical guide cups, whereas conical members 35 and 37 are called diverting conuses. The reason for choosing these designations will appear from the following disclosure of the mode of operation of said separator.

On all conical members 28, 29, 30 as well as 35, 36, 37, and 38 radial walls 41, 42 and 43—52, respectively, are standing. Between interior casing 21 and exterior casing portion 22 radial walls 53, 54 are provided. The number of radial walls along the periphery may vary, but commonly four radial walls or take-along plates are used, uniformly distributed. The larger cross section, the larger number of radial walls or take-along plates will be needed.

In transversal wall 17 openings 55 and 56 are made, as shown. Openings 56 form a connection between the preliminary separation compartment formed in interior casing 21 and the space in lower exterior casing portion, whereas openings 55 form peripheral axial flow passages between the axial end opening 59 in lower exterior casing portion 23 and axial end opening 26 in upper exterior casing portion 22. The axial end opening 59 in lower exterior casing portion has a diameter smaller than that of the axial end opening 26 in upper exterior casing portion 22. The difference between diameters may be adjusted by exchangeing specific weight ring 27.

On stationary mantle 6 an interior cover 57, and an exterior cover 58 are provided. Said covers, as shown, are kept in place by tie-rods 8 with associated tightening nuts 8'. Exterior cover 58 is provided with an outlet member 60 for pure water. On top in exterior cover 58 an inlet member 61 for pure water is provided. Said inlet member is connected with a pipe 62 extending into said axial opening 26 and supplying pure water to the space between interior casing 21 and exterior casing 22.

Exterior cover 58 is, furthermore, provided with a screen 63 with an associated inlet pipe 64 for water having an oil content. Inlet pipe 64 extends, as shown, into said inverse inlet hopper 25, and into the cup shaped compartment 20.

A V-belt pulley 65 is mounted on the lower end of separator shaft 15, which end depends from base plate 3. Shaft 15 and the associated components may be rotated by a motor, not shown, by the aid of a V-belt 66.

The separator operates in the following manner:

The separator is started when shaft 15 is rotated by the aid of V-belt drive 65, 66. Pure water is introduced through inlet member 61 and pipe 62. A water lock will build up in the shape of a pure water annulus against interior wall of separator casing 22, 23. The build up of said water lock is complete when water flows out across the rim of axial opening 26. The object of said water lock is that any possible oil residues in the separator will be prevented from being pushed out into outlet member 60 for pure water.

Now water contaminated with oil (e.g. from an oil boom) can be introduced into said separator through inlet pipe 64. Advantageously, a slow running lamella pump, geared pump, or screw pump is used for the water to be purified, so as not to agitate the liquid mixture too much. Stationary inlet pipe 64, as mentioned, extends down into cylinder or cup 19. Contaminated water flowing in is, thus, received in the separator in a gentle manner so as to prevent formation of emulsions or a beginning formation of emulsions. In space 20 the liquid is made to rotate, and a certain liquid pressure will build up. This forces the liquid out through openings or holes 31.

In order to ensure that the liquid may not work its way to screen 63, as shown, there are provided take along plates 68 in hopper 25 around inlet pipe 64. If the level of liquid gets too high in this area (e.g. due to exceeding the capacity) liquid reaching said take along plates 68 will be rotated and forced down and out through holes 31.

Through said openings 31 the introduced liquid mixture passes into interior casing 21. Here, a preliminary separation will take place with utilization of conical elements 28, 29, and 30. The water will tend to flow outwards, and some oil will, naturally, be taken along. The liquid will pass through openings 32 in the uppermost conical member 28, which will, thus, act as a guide cup, and any oil taken along will tend to rise to the surface at the underside of member 38. Liquid flowing down and past end rim of member 28 will be subjected to a separating effect at said rim. Liquid flowing towards member 29 will be severely deflected at the inner rim of said member, thus, such a member is called a diverting conus. In this manner the liquid flows on downwards and finally, passes through aperatures 56 in transversal wall 17 and into lower casing portion 23. In said preliminary separating compartment, i.e. interior casing 21, a preliminary separation takes place, and the oil particles are made to coalesce into largest possible drops or a real oil flow. In this separation step the oil is brought up to the surface as quickly as possible so that any precipitation of solids is prevented.

In lower casing portion 23 water will tend to flow outwards, whereas oil will tend to flow towards outlet 59. This means that water tends to flow towards opening 26, through apertures 55 in transversal wall 17. In said lower casing portion 23 the shown conical members contribute to the desired separation oil all the time tending to flow towards the surface, i.e. radially inwards and down towards outlet 59. The reason why water will tend to flow down towards opening 26 is that an "overpressure" is built up, i.e. there is a difference of height between the overflow rims formed by apertures 26, and 59. The separator receives a certain volume of liquid, resulting in the level in said lower space to reach the rim around aperture 59. The difference of height or drop is, thus, the difference between the opening radiuses of openings 59 and 26.

Separated oil will gradually build up and flow towards outlet 59.

If the capacity of said separator is exceeded water will flow across said rim with oil. The pure water will, thus, not be contaminated. The flow between overflow rim 59 and overflow rim 26 is constant in case of full capacity/excess capacity.

Separation is completed in the compartment in lower casing portion 23 with utilization of guide cups 36 and 38, and diverting conuses 35 and 37. Here, an almost radial flow of liquid is achieved with the liquid being subjected to increasing centrifugal forces as it flows outwards.

In the embodiment two steps are shown (one step is one guide cup and one diverting conus). In larger separators a larger number of steps may be used, i.e. as many steps as practical considering space. Said diverting conuses will result in a certain velocity upwards of the liquid flow, and small oil particles can more easily break away when the water flow is deflected and passes towards outlet 26. Said diverting conuses also cause the water to flow a longer path towards outlet 26. Thus, a longer period of separation is achieved.

The mixture is forced to change direction of flow several times while passing outwards, and in a manner suitable for the desired separation. Fully, pure water will rise up along the outside of exterior conical member 35 and pass through openings 55 and further upwards and out through the axial opening 26, and out through outlet member 60.

Separated oil, as mentioned, will gradually build up in a layer on the surface of water, and separated oil will flow out through axial end opening 59 and out through oil outlet member 14.

As mentioned, there are radial walls acting as take-along plates provided between the conical members, and between interior casing 21 and exterior casing 22. This is primarily necessary to keep the mixture of oil and water rotating in order to ensure maximum centrifugal effect across all diametres. Said take-along plates also contribute to maintain a stable annulus of water and oil to keep everything in balance.

Specific weight ring 27 may be exchanged because its opening diametre is important. The oil layer formed will increase with the specific weight of the oil, and if the opening of specific weight ring is too large, and the oil has too high specific weight oil might pass into the passage for pure water. If the diametre of specific weight ring is too small the capacity of the separator is reduced.

When separation is finished the separator is stopped. When casing 22, 23 is at a standstill water and oil residues will flow out through openings 55 and 56 and out through oil outlet 14.

As shown, the top side of plate 17 is inclined or conical. This will facilitate an outward flow of any solids and mud during stillstand. Since water is separated at a cold state only loose coats will be formed during separation and most of these will disappear out of the system during stillstand. However, there may often remain a certain fatty coat. This is the reason for providing said water seal in a separate inlet 61, 62 to lift such possible fatty residues towards the surface instead of forcing them out with the pure water. Said water seal is necessary to prevent oil from passing out with the water. When the separator is started any possible oil residues in said lower exterior casing 23 will be caught by a catch ring 67.

Before separation is stopped a period of separation with pure water (preferably, exceeding the capacity of the separator) will have a purifying effect, any possible oil residues then to a certain degree being flushed out by pure water. Hot water will be especially efficient. Also, the inner parts of the separator should have as smooth surfaces as possible.

**Claims**

1. A separator for separating two mixed liquids having different specific weight, e.g. water contaminated with oil, a rotatable casing (22, 23) having coaxial openings (26, 59) respectively at each axial end, one of said coaxial openings (26) having a larger radius than the other, and comprising a transverse wall (17) inside said casing, said transverse wall forming a physical barrier for the liquid, and at its periphery, at a radius larger than the largest opening radius, forms a peripheral, axial flow connection (55) along the internal wall of the casing, between the two coaxial openings (26, 59), and with an axial inlet (64, 31) for the mixed liquids, said axial inlet entering the casing (22, 23) at the side of the transverse wall (17), where the coaxial opening (26) having the biggest radius is located, said wall carrying a coaxial enlargement (21), forming a chamber having an axially symmetric wall, the transverse wall (17) forming an end wall in said chamber, and being provided with a coaxial passage (56), chracterized in first frusto-conical members (28, 30) within the chamber (21), extending from the axially symmetric wall thereof, tapering towards the transverse wall, and having top radii which are smaller than the radius of the opening (56) in the transverse wall, said frusto-conical members (28, 30) having openings (32, 33) adjacent to the axially symmetric wall, and in second frusto-conical members (35, 36, 37, 38) in the housing, being attached to and extending coaxially outwards from the tarnsverse wall (17), at the side thereof turned towards the coaxial opening (59) having the smaller radius, tapering towards the latter and being stepped heightwise, the top-radii being bigger than the smallest outlet radius (59), the highest of said second frusto-conical members (36, 38) having openings (39, 40) adjacent to the transverse wall (17), the opening (56) communicating with the inward of the second conical members (38), and the peripheral, axial flow connection (55) being located outside of the outermost of the second frusto-conical members (35).

2. A separator as defined in claim 1, characterized in that the axially symmetric wall of said chamber extends outwards into the adjacent coaxial opening (26) in the casing, and there forms a connector member (25) for receiving a stationary inlet pipe (64).

3. A separator as defined in claim 2, characterized in that said compartment comprises a cup shaped space (20) opening towards the inlet pipe (64), and being surrounded by said frusto-conical members (28, 29, 30) in said compartment.

4. A separator as defined in any of the preceding claims, characterized in radial walls (41, 42; 43—52) on said first and second frusto-conical members.

5. A separator as defined in any of the preceding claims, characterized in a feeding device (61, 62) for building up a liquid ring consisting of a heavier liquid in the casing (22, 23), when said casing starts rotation, and before said mixture of liquids is introduced.

6. A separator as defined in any of the preceding claims, characterized in a catch ring (67) projecting into the casing (23) from its inner wall, on the side of the transversal wall (17), where the coaxial opening (59) having the smaller radius is situated.

7. A separator as defined in claim 2, characerized in radial driver plates (68) inside said connector member (25), and distributed around said stationary inlet pipe (64).

**Patentansprüche**

1. Separator zum Trennen von zwei miteinander vermischten Flüssigkeiten unterschiedlichen spezifischen Gewichts, z.B. mit Öl verunreinigtes Wasser, mit einem drehbaren Gehäuse (22, 23) mit jeweils an jedem axialen Ende angeordneten koaxialen Öffnungen (26, 59), von denen eine (26) einen größeren Radius aufweist als die andere, und mit einer Querwand (17) im Inneren des Gehäuses, die für die Flüssigkeit eine körperliche Sperre bildet und an ihrem äußeren Radius, der größer ist also der größte Öffnungsradius, eine axiale Rand-Strömungsverbindung (55) entlang der Innenwand des Gehäuses zwischen den beiden Öffnungen (26, 59) bildet, und mit einem axialen Einlaß (64, 31) für die vermischten Flüssigkeiten, der auf der Seite der Querwand (17) in das Gehäuse (22, 23) eintritt, auf der die koaxiale Öffnung (26) mit dem größeren Radius angeordnet ist, wobei diese Wand eine koaxiale Erweiterung (21) trägt, die eine Kammer mit einer axialsymmetrischen Wand bildet und von welcher Kammer die Querwand (17) eine Endwand darstellt, in der ein Koaxialer Durchgang (56) vorgesehen ist, gekennzeichnet durch erste kegelstumpfförmige Bauteile (26, 30) in der Kammer (21), die sich von der axial-symmetrischen Wand konisch zur Querwand hin verjüngen und mit oberen Radien, die kleiner sind als der Radius der Öffnung (56) in der Querwand, wobei die kegelstumpfförmigen Bauteile (26, 30) der axial-symmetrischen Wand benachbart Öffnungen (32, 33) aufweisen, und durch zweite kegelstumpfförmige Bauteile (35, 36, 37, 38) in dem Gehäuse, die an der Querwand (17) befestigt sind und sich von dieser auf der Seite koaxial nach außen erstrekken, die der koaxialen Öffnung (59) mit dem kleineren Radius zugewandt ist, wobei sie konisch auf letztere zulaufen und in ihrer Höhe abgestuft sind mit oberen Radien, die größer sind als der kleinste Auslaßradius (59) und wobei die höchsten der genannten kegelstumpfförmigen Bauteile (36, 38) neben der Querwand (17) benachbart Öffnungen (39, 40) besitzen, wobei die Öffnung (56) mit dem Inneren der zweiten kegelstumpfförmigen Bauteile (38), in Strömungsverbindung steht und die axiale Rand-Strömungsverbindung (55) außerhalb des am weitesten außen gelgenen zweiten kegelstumpfförmigen Bauteils (35) angeordnet ist.

2. Separator nach Anspruch 1, durch gekennzeichnet, daß die axial-symmetrische Wand der genannten Kammer sich nach außen in die Nähe der koaxialen Öffnung (26) in dem Gehäuse erstreckt und dort ein Anschlußstück (25) zur Aufnahme eines stationären Einlaßrohrs (64) bildet.

3. Separator nach Anspruch 2, dadurch gekennzeichnet, daß die genannte kammer eine tassenförmigen Raum (209) umfaßt, der in Richtung des Einlaßrohrs (64) geöffnet und von den genannten kegelstumpfförmigen Bauteilen (28, 29, 30) in dieser Kammer umgeben ist.

4. Separator nach einem der vorangegangenen Ansprüche, gekennzeichnet durch radiale Wände (41, 42; 43—52) auf den ersten und zweiten kegelstumpfförmigen Bauteilen.

5. Separator nach einem der vorangegangenen Ansprüche gekennzeichnet durch eine Zuführungsvorrichtung (61, 62) zum Aufbau eines Flüssigkeitsrings, bestehend aus einer schwereren Flüssigkeit in dem Gehäuse (22, 23), wenn das Gehäuse mit der Drehung beginnt und bevor die Mischung der Flüssigkeiten eingebracht wird.

6. Separator nach einem der vorangegangenen Ansprüche, gekennzeichnet durch einen Fangring (67), der in dem Gehäuse (23) von der Innenwand auf der Seite der Querwand (77) gelegen nach innen ragt, die der koaxialen Öffnung (59) mit dem kleineren Radius zugewandt ist.

7. Separator nach Anspruch 2, gekennzeichnet durch radiale Antribsplatten (68) im Inneren des Anschlußstücks (25), die um das stationäre Einlaßrohr (64) herum angeordnet sind.

**Revendications**

1. Séparateur pour séparer deux liquides mélangés ayant des poids spécifiques différents, par exemple de l'eau contaminée par de l'huile, comprenant une enveloppe rotative (22, 23) ayant des ouvertures coaxiales (26, 59) respectivement à chaque extrémité axiale, l'une desdites ouvertures coaxiales (26) ayant un rayon plus grand que l'autre, et comprenant une paroi transversale (17) à l'intérieur de ladite enveloppe, ladite paroi transversale formant une barrière physique pour le liquide et, à sa pèriphèrie, à un rayon plus grand que le plus grand rayon d'ouverture, formant une liaison périphérique d'écoulement axial (55) le long de la paroi interne de l'enveloppe, entre les deux ouvertures coaxiales (26, 59), et comprenant une entrée axiale (64, 31) pour les liquides mélangés, ladite entrée axiale pénétrant dans l'enveloppe (22, 23) du côté de la paroi transversale (17) où est située l'ouverture coaxiale (26) ayant le plus grand rayon, ladite paroi portant un élargissement coaxial (21) formant une chambre ayant une paroi axialement symétrique, la paroi transversale (17) formant une paroi extrême dans ladite chambre et ètant munie d'un passage coaxial (56), caractérisé par des premiers éléments tronconiques (28, 30) à l'intérieur de la chambre (21) qui s'étendent depuis sa paroi axialement symétrique, qui se rétrécissent en direction de la paroi transversale et qui ont des rayons au sommet qui sont plus petits que le rayon de l'ouverture (56) dans la paroi transversale, lesdits éléments tronconiques (28, 30) ayant des ouvertures (32, 33) adjacentes à la paroi axialement symétrique, et par des seconds éléments tronconiques (35, 36, 37, 38) dans l'enveloppe qui sont fixés à la paroi transversale (17) en s'étendant coaxialement depuis celle-ci du côté de la paroi dirigé vers l'ouverture coaxiale (59) ayant le plus petit rayon, qui se rétrécissent en direction de cette dernière et qui sont en gradins sur leur hauteur, les rayons au sommet étant supérieurs au plus petit rayon externe (59), les plus hauts desdits seconds éléments tronconiques (36, 38) ayant des ouvertures (39, 40) adjacentes à la paroi transversale (17), l'ouverture (56) communiquant avec l'intérieur des seconds éléments tronconiques (38), et la liaison périphérique d'écoulement axial (55) étant située à l'extérieur du plus externe des seconds éléments tronconiques (35).

2. Séparateur selon la revendication 1, caractérisé en ce que la paroi axialement symétrique de ladite chambre s'étend à l'extérieur dans l'ouverture coaxiale adjacente (26) de l'enveloppe, et y forme un élément de liaison (25) pour recevoir une conduite d'entrée fixe (64).

3. Séparateur selon la revendication 2, caractérisé en ce que ledit compartiment comprend un espace en forme de cuvette (20) qui s'ouvre vers la conduite d'entrée (64) et qui est entouré par lesdits éléments tronconiques (28, 29, 30) dans ledit compartiment.

4. Séparateur selon l'une des revendications précédentes, caractérisé par des parois radiales (41, 42; 43—52) sur ledits premiers et second éléments tronconiques.

5. Séparateur selon l'une des revendications précédentes, caractérisé par un dispositif d'alimentation (61, 62) destiné à former un anneau liquide consistant en un liquide plus lourd dans l'enveloppe (22, 23) lorsque ladite enveloppe commence à tourner et avant l'introduction dudit mélange de liquides.

6. Séparateur selon l'une des revendications précédentes, caractérisé par une bague d'arrêt (67) qui fait saillie dans l'enveloppe (23) depuis sa paroi interne du côté de la paroi transversale (17) où est située l'ouverture coaxiale (59) ayant le plus petit rayon.

7. Séparateur selon la revendications 2, caractérisé par des plaques d'entraînement radiales (68) à l'intérieur dudit élément de liaison (25) et distribuées autour de ladite conduite d'entrée fixe (64).